# EUROPÄISCHE PATENTSCHRIFT

(11) **EP 0 914 577 B1**
(45) Veröffentlichungstag und Bekanntmachung des Hinweises auf die Patenterteilung: **31.07.2002**
(21) Anmeldenummer: 98912247.8
(22) Anmeldetag: 17.02.1998
(51) Int. Cl.: F16L 37/133, F16L 25/00

(54) **ANORDNUNG ZUM BEFESTIGEN EINES WELLROHRS AUF EINEM STUTZEN**
DEVICE FOR ATTACHING A CORRUGATED TUBE TO A CONNECTION PIECE
DISPOSITIF POUR FIXER UN TUBE ONDULE A UNE TUBULURE

(30) Priorität: 04.06.1997 DE 19723410
(43) Veröffentlichungstag der Anmeldung: 12.05.1999
(73) Patentinhaber: ROBERT BOSCH GMBH, 70442 Stuttgart (DE)
(72) Erfinder: FRANK, Kurt, D-73614 Schorndorf (DE)
(86) Internationale Anmeldenummer: DE9800453
(87) Internationale Veröffentlichungsnummer: WO9855793

(56) Entgegenhaltungen:
- EP-A- 0 634 600
- WO-A-92/11484
- FR-A- 2 605 709
- GB-A- 1 437 725
- US-A- 3 724 882
- US-A- 3 997 195

## Beschreibung

### Stand der Technik

Die Erfindung betrifft einen im wesentlichen hohlzylindrischen Stutzen (12) mit einer Anordnung zum Befestigen eines Wellrohrs, insbesondere bei Kraftstofförderaggregaten in Kraftfahrzeugen.

Solche in der Regel flexiblen Wellrohre werden bei Kraftstofförderaggregaten für Kraftfahrzeuge als Verbindungsleitungen vom Druckstutzen einer in einem Filtertopf integrierten Elektrokraftstoffpumpe zu einem in einem Tankflansch ausgebildeten Anschlußstutzen für die zur Brennkraftmaschine führende Förderleitung verwendet (DE 44 44 854 A1 oder DE 42 24 981 A1). Zur Erzielung einer druckfesten Befestigung zwischen Stutzen und Wellrohr trägt dort der Stutzen auf seinem Außenmantel ein sog. Tannenbaumprofil, auf das das Wellrohr mit einem speziellen, geraden Endformstück und darin eingebrachten Hilfsrillen aufgeschoben wird. Das Endformstück des Wellrohrs verkrallt sich mit seinen Hilfsrillen im Tannenbaumprofil, so daß die Befestigung sich auch nicht unter Förderdruck lösen kann.

Durch die US-A-3 724 882 ist eine Befestigungsanordnung für einen flexiblen Schlauch auf einem Stutzen bekannt, bei der auf den Stutzen ein separates Verbindungselement aufgesetzt ist. Das Verbindungselement weist mehrere in Radialabstand und in Längsrichtung zum Stutzen verlaufende Federbeine mit radial zum Stutzen hin vorspringender Haltenase auf. Über die Federbeine ist ein ringförmiges Klemmelement gelegt, durch das die Federbeine radial mit ihren Haltenasen in den Schlauch hineingedrückt werden. Diese Befestigungsanordnung ist nur für Schläuche aus felxiblem Material geeignet, da sonst kein sicherer Halt gewährleistet ist.

Durch die EP-A-0 634 600 ist ein Verbindungsstück für ein Wellrohr bekannt, das dazu vorgesehen ist, mit einem Wellrohr verbunden zu werden. Das Verbindungsstück weist mehrere in Radialabstand und in Längsrichtung des Wellrohrs verlaufen Federarme mit radial zum Wellrohr hin vorspringender Haltenase auf. Das Verbindungsstück ist nicht dazu geeignet das Wellrohr auf einem Stutzen zu befestigen.

### Vorteile der Erfindung

Die erfindungsgemäße Befestigungsanordnung eines Wellrohrs auf einem Stutzen mit den kennzeichnenden Merkmalen des Anspruchs 1 hat den Vorteil, daß sowohl auf das spritztechnisch komplizierte Tannenbaumprofil am Stutzen als auch auf eine besondere Aufpreßgeometrie eines Endstücks am Wellrohr verzichtet werden kann. Dadurch kann das Wellrohr endstücklos als sog. "unendliches Wellrohr" gefertigt und bei der Montage auf die erforderliche Größe abgelängt werden. Dies bringt Kostenvorteile sowohl bei der Herstellung als auch bei der Lagerung des Wellrohrs, das nicht mehr in verschiedenen Längen vorgehalten werden muß und nunmehr im aufgerollten Zustand als platzsparender Wickel gelagert werden kann. Die Federbeine mit Haltenasen am Stutzen können mittels Zwangsentformung mit kostengünstigen Kunststoff-Spritzwerkzeugen ohne aufwendige Querschieber erzeugt werden, so daß sich auch hier ein Kostenvorteil gegenüber dem Tannenbaumprofil ergibt. Insgesamt erhält man durch die erfindungsgemäße Befestigungsanordnung eine sehr kostengünstige und qualitätsmäßig hervorragende Verbindungstechnik zwischen Wellrohr und Stutzen mit der Möglichkeit der sehr einfachen und kostensparenden Demontage im Servicefall.

Durch die in den weiteren Ansprüchen aufgeführten Maßnahmen sind vorteilhafte Weiterbildungen und Verbesserungen der im Anspruch 1 angegebenen Meßvorrichtung möglich.

In einer bevorzugten Ausführungsform der Erfindung wird zwischen dem Außenmantel des Stutzens und einem Wellenberg des Wellrohrs ein Dichtungsring in Form eines O-Rings eingelegt. Durch das ringförmige Klemmelement, das als Schlauchschelle, Kabelbinder oder Schiebemuffe ausgebildet werden kann und eine radial gerichtete Spannkraft auf die Federbeine und über deren in die Wellentäler des Wellrohrs eingreifenden Nasen auf das Wellrohr und den Stutzen aufbringt, wird das Wellrohr gegenüber dem Außenmantel des Stutzens absolut druckdicht abgedichtet.

Gemäß einer alternativen Ausführungsform der Erfindung ist zur Ausbildung der Federbeine ein den Stutzen mit Radialabstand koaxial umgebender Ring mit Längsschlitzen versehen, die von einem geschlossenen Ringkragen bis zum freien Stirnende des Rings hin reichen. In diesem Fall kann die O-Dichtung auch zwischen der inneren Ringfläche des die axial wegstrebenden Federbeine tragenden Ringkragens und einem Wellental des Wellrohrs eingelegt werden.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise eine Befestigungsanordnung eines Wellrohrs auf einem Stutzen, teilweise geschnitten zu einem Zeitpunkt vor Beendigung der Montage,
- Fig. 2: eine gleiche Darstellung wie in Fig. 1 nach abgeschlossener Montage,
- Fig. 3: eine gleiche Darstellung wie in Fig. 2 gemäß zweier weiterer alternativer Ausführungsbeispiele,
- Fig. 4: eine gleiche Darstellung wie in Fig. 1 gemäß einem vierten Ausführungsbeispiel.

### Beschreibung der Ausführungsbeispiele

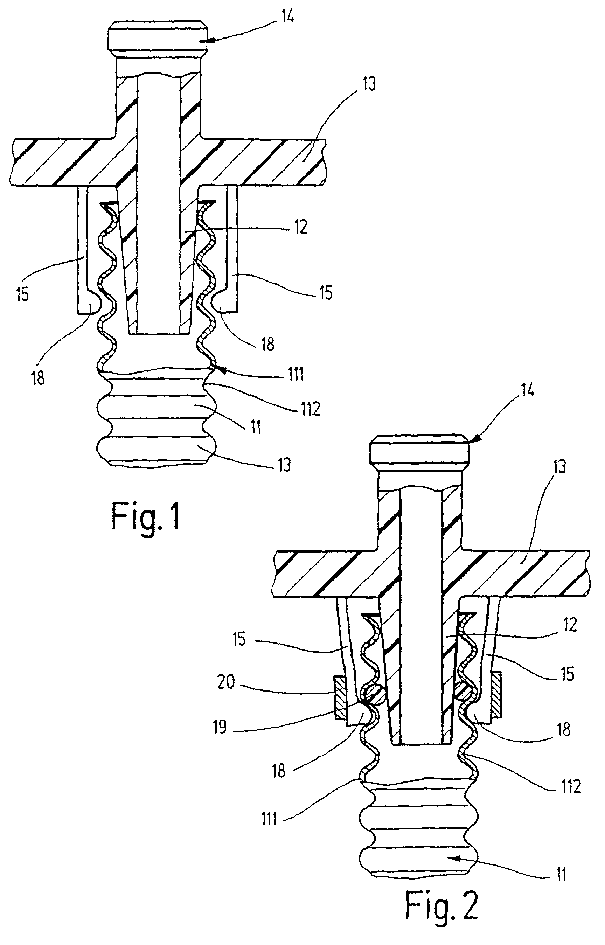

Die in Fig. 1 und 2 im Längsschnitt dargestellte Befestigungsanordnung eines Wellrohrs 11 auf einem Stutzen 12 ist in einem Kraftstofförderaggregat für Kraftfahrzeuge vorgenommen, wie es beispielsweise in der DE 44 44 854 A1 beschrieben ist. Der hohlzylindrische Stutzen 12 ist mit einem Tankflansch 13 aus Kunststoff einstückig gefertigt, der auf der Oberseite eines Kraftstofftanks aufgesetzt ist. Der hohlzylindrische Stutzen 12 bildet dabei den in das Tankinnere hineinragenden Teil eines Anschlußstutzens 14 für eine von dem Kraftstofftank zu der Brennkraftmaschine eines Kraftfahrzeugs führenden Kraftstofförderleitung. Das Wellrohr 11 stellt eine Verbindung zur Druckseite einer im Kraftstofftank angeordneten Elektrokraftstoffpumpe her und ist dort an den Druckstutzen der Kraftstoffpumpe angeschlossen. Das flexible Wellrohr 11 besitzt in bekannter Weise eine Vielzahl von aufeinanderfolgend angeordneten Wellenberge oder -erhebungen 111 und Wellentäler oder -vertiefungen 112, die ring- oder schraubenförmig über den Umfang des Wellrohrs 11 verlaufen. Der hohlzylindrische Stutzen 12 kann aus Gründen der Entformung nach dem Spritzvorgang des Tankflansches 13 auch leicht konisch ausgeführt werden, wie dies in Fig. 1 - 4 dargestellt ist.

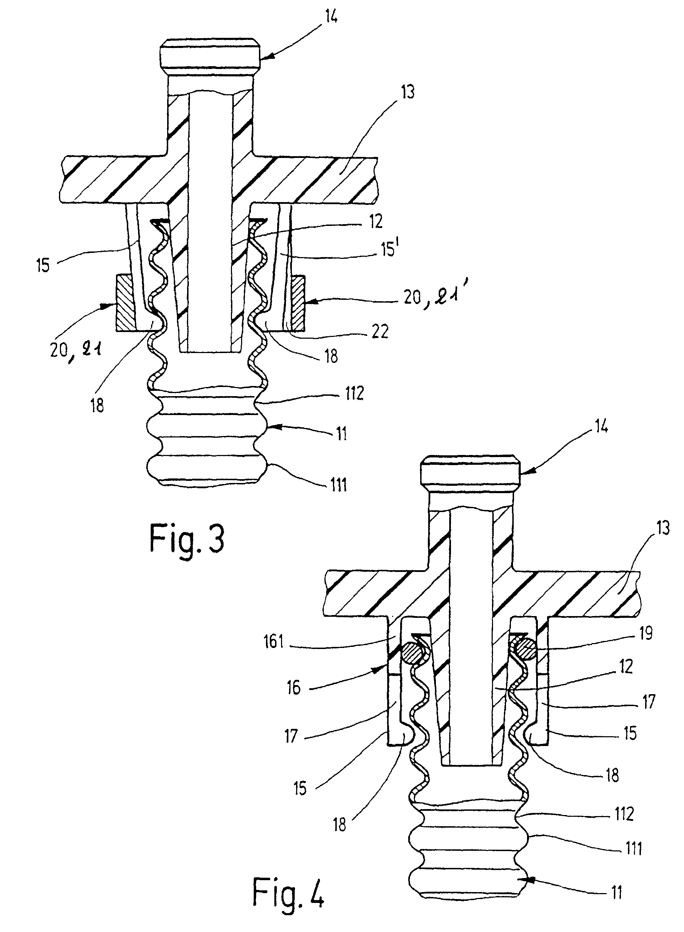

Im Radialabstand zum Stutzen 12 sind mehrere auf einem Teilerkreis zueinander versetzt liegende Federbeine 15 angeordnet, die sich im wesentlichen parallel zur Stutzenachse erstrecken und an dem Stutzen 12 bzw. an dem Tankflansch 13 einstückig angeformt sind. Diese Federbeine 15 können wie in Fig. 1 als Einzelelemente ausgebildet sein, die von der Innenfläche des Tankflansches 13 rechtwinklig abstehen, oder auch dadurch erhalten werden, das - wie in Fig. 4 dargestellt ist - ein am Tankflansch 13 angeformter, den Stutzen 12 koaxial umgebender zylinderförmiger Ring 16 mit Längsschlitzen 17 versehen ist, die von dem freien Ende des Rings 16 ausgehen und bis zu einem geschlossenen Ringkragen 161 reichen. Alle Federbeine 15 sind gleich lang ausgebildet und tragen an ihrem freien Ende radial zum Stutzen 12 hin vorspringende Haltenasen 18, die so geformt sind, daß sie weitgehend formschlüssig in ein Wellental 112 des Wellrohrs 11 einzugreifen vermögen. Die Haltenasen 18 sind einstückig mit den Federbeinen 15 und werden beim Spritzvorgang des Tankflansches 13, ebenso wie der Stutzen 12 und die Federbeine 15 gleich mit angeformt.

Zur Herstellung der Befestigungsanordnung wird das Wellrohr 11 mit der erforderlichen Länge von einem Wellrohrwickel abgeschnitten und mit seinem einen Ende auf den Stutzen 12 aufgeschoben. Zur flüssigkeitsdichten Verbindung der Befestigungsanordnung wird - wie dies in Fig. 2 skizziert ist - im Innern des Wellrohrs 11 ein O-förmiger Dichtring 19 in einen Wellenberg 111 eingelegt und zusammen mit dem Wellrohr 11 auf den Stutzen 12 aufgeschoben. Dann wird außen um die Federbeine 15 herum ein Klemmelement 20 gelegt und mit dem Klemmelement 20 eine radiale Spannkraft auf die Federbeine 15 aufgebracht, wodurch die Haltenasen 18 der biegeelastischen Federbeine 15 in ein Wellental 112 des Wellrohrs 11 eintauchen und dieses gegen den Außenmantel des Stutzens 12 pressen. Damit wird gleichzeitig auch der Dichtring 19 zwischen dem Stutzen 12 und dem Wellrohr 11 kraftschlüssig festgespannt. Das Klemmelement 20 kann verschiedenartig ausgeführt werden, z.B. als Schlauchschelle auch als Kabelbinder. Die endgefertigte Befestigungsanordnung zwischen Wellrohr 11 und Stutzen 12 ist in Fig. 2 dargestellt. Wie ohne weiteres zu erkennen ist, wird das Wellrohr 11 unverschieblich und druckdicht von den Federbeinen 15 mit ihren Haltenasen 18 unter der Wirkung des Klemmelements 20 festgelegt.

Bei den in Fig. 3 links und rechts von der Stutzenachse dargestellten beiden Ausführungsbeispielen der Befestigungsanordnung zwischen Wellrohr 11 und Stutzen 12 ist das ringförmige Klemmelement 20 jeweils als Schiebemuffe 21 bzw. 21' ausgebildet. Die links in Fig. 3 zu sehende Schiebemuffe 21 weist einen gegen die Aufsteckrichtung sich konisch verjüngenden lichten Querschnitt auf, so daß die Schiebemuffe 21 beim Aufschieben auf die Federbeine 15 mit zunehmendem Aufschiebeweg zunehmend die Federbeine 15 zum Stutzen 12 hin drückt, so daß deren Haltenasen 18 in ein Wellental 112 des Wellrohrs 11 eintauchen und das Wellrohr 11 auf dem Stutzen 12 kraftschlüssig festspannen. In dem in Fig. 3 rechts dargestellten Ausführungsbeispiel der Schiebemuffe 21' weist diese keine konische, sondern eine zylindrische Innenringfläche auf. Hier sind die Fedebeine 15' auf ihrer vom Stutzen 12 abgekehrten Rückseite mit einer keilförmigen Längsrippe 22 versehen, deren radiale Rippenhöhe gegen die Aufsteckrichtung hin anwächst. Zum Aufschieben der Schiebemuffe 21' auf die Federbeine 15' müssen diese von Hand soweit auf das auf den Stutzen 12 aufgeschobene Wellenrohr 11 aufgepreßt werden, bis die Schiebemuffe 21' mit ihrer zylinderförmigen Innenringfläche über die Längsrippen 22 hinweggeschoben werden kann.

Zur flüssigkeitsdichten Ausführung der beschriebenen Befestigungsanordnung zwischen Wellrohr 11 und Stutzen 12 ist in einem alternativen Ausführungsbeispiel gemäß Fig. 4 der O-förmige Dichtring 19 nicht - wie bei Fig. 2 - zwischen dem Stutzen 12 und dem Wellrohr 11 sondern zwischen dem Wellrohr 11 und dem Ringkragen 161 des Rings 16 angeordnet und preßt sich kraftschlüssig einerseits in einem Wellental 112 an das Wellrohr 11 und andererseits an der zylindrischen Innenfläche des Ringkragens 161 an. Das über die Federbeine 15 aufzuschiebende Klemmspannelement 20 ist in Fig. 4 nicht dargestellt. Es kann wie in Fig. 2 als Schlauchklemme oder Kabelbinder oder wie in Fig. 3 als Schiebemuffe ausgeführt. werden. In gleicher Weise wie in Fig. 2 und 3 dargestellt ist, preßt das Klemmelement 20 die Haltenasen 20 an den Federbeinen 15 in ein Wellental 112 des Wellrohrs 11 ein und erzeugt dabei gleichzeitig einen radialen Anpreßdruck des Ringkragens 161 an dem Dichtring 19.

## Patentansprüche

1. Im wesentlichen hohlzylindrischer Stutzen (12) mit einer Anordung zum Befestigen eines Wellrohrs (11), insbesondere bei Kraftstofförderaggregaten in Kraftfahrzeugen, **dadurch gekennzeichnet, daß** am Stutzen (12) mindestens ein im Radialabstand und in Längsrichtung zu diesem verlaufendes Federbein (15;15') mit radial zum Stutzen (12) hin vorspringender Haltenase (18) angeformt ist, daß außen um das mindestens eine Federbein (15;15') und um das auf den Stutzen (12) aufgeschobene Wellrohr (11) herum ein ringförmiges Klemmelement (20) gelegt ist, das eine zum Wellrohr (11) hin gerichtete, radiale Spannkraft an dem mindestens einen Federbein (15;15') erzeugt, und daß die Haltenase (18) an dem mindestens einen Federbein (15;15') in ein Wellental (112) des Wellrohrs (11) eingreift.

2. Anordnung nach Anspruch 1, **dadurch gekennzeichnet, daß** die Haltenase (18) an dem mindestens einen Federbein (15;15') so geformt ist, daß sie weitgehend formschlüssig in ein Wellental (112) des Wellrohrs (11) einzugreifen vermag.

3. Anordnung nach Anspruch 1 oder 2, **dadurch gekennzeichnet, daß** eine Mehrzahl von jeweils eine Haltenase (18) tragenden Federbeinen (15;15') vorgesehen ist, die auf einem zum Stutzen (12) koaxialen Teilerkreis um vorzugsweise gleiche Umfangswinkel gegeneinander versetzt angeordnet sind.

4. Anordnung nach einem der Ansprüche 1 - 3, **dadurch gekennzeichnet, daß** das ringförmige Klemmelement (20) eine Schlauchschelle ist.

5. Anordnung nach einem der Ansprüche 1 - 3, **dadurch gekennzeichnet, daß** das ringförmige Klemmelement ein Kabelbinder ist.

6. Anordnung nach Anspruch 3, **dadurch gekennzeichnet, daß** das ringförmige Klemmelement (20) eine Schiebemuffe (21) ist, die einen gegen die Aufsteckrichtung sich konisch verjüngenden, lichten Querschnitt aufweist.

7. Anordnung nach Anspruch 3, **dadurch gekennzeichnet, daß** das ringförmige Klemmelement (20) eine Schiebemuffe (21') mit zylindrischer Innenringfläche aufweist und daß die Federbeine (15') auf ihrer vom Stutzen (12) abgekehrten Rückseite eine keilförmige Längsrippe (22) tragen, deren radiale Rippenhöhe gegen die Aufsteckrichtung hin anwächst.

8. Anordnung nach einem der Ansprüche 1 - 7, **dadurch gekennzeichnet, daß** zwischen dem Außenmantel des Stutzens (12) und einem Wellenberg (111) des Wellrohrs (11) ein Dichtring (19) kraftschlüssig einliegt.

9. Anordnung nach einem der Ansprüche 1 - 7, **dadurch gekennzeichnet, daß** zur Ausbildung der Federbeine (15) ein den Stutzen (12) mit Radialabstand koaxial umgebender Ring (16) mit um vorzugsweise gleiche Umfangswinkel zueinander versetzt angeordneten Längsschlitzen (17) versehen ist, die von einem einen Ringabschnitt bildenden geschlossenen Ringkragen (161) bis zum freien Stirnende des Rings (16) reichen.

10. Anordnung nach Anspruch 9, **dadurch gekennzeichnet, daß** zwischen der inneren Ringfläche des Ringkragens (161) und einem Wellental (112) des Wellrohrs (11) ein Dichtring (19) kraftschlüssig enliegt.

11. Anordnung nach einem der Ansprüche 1 - 10, **dadurch gekennzeichnet, daß** der Stutzen (11) und die Federbeine (15;15') mit Haltenasen (18) einstückig an einem Flansch (13) für einen Kraftstofftank ausgebildet sind und daß der Stutzen (12) das vom Tankflansch (13) zum Tankinnern hin vorstehende Rohrstück eines Anschlusses (14) für eine Kraftstoff-Förderleitung bildet.

## Claims

1. Connecting piece (12) which is essentially cylindrical and hollow and has an arrangement for the attachment of a corrugated pipe (11), in particular in fuel feed units in motor vehicles, **characterized in that** there is integrally formed on the connecting piece (12) at least one spring strut (15; 15') which runs at a radial distance from, and in the longitudinal direction to, the said connecting piece and has a retaining lug (18) projecting radially towards the connecting piece (12), **in that** an annular clamping element (20) is placed on the outside around the at least one spring strut (15; 15') and around the corrugated pipe (11) pushed onto the connecting piece (12), the said clamping element producing a radial clamping force on the at least one spring strut (15; 15'), which clamping force is directed towards the corrugated pipe (11), and **in that** the retaining lug (18) on the at least one spring strut (15; 15') engages in a corrugation trough (112) of the corrugated pipe (11).

2. Arrangement according to Claim 1, **characterized in that** the retaining lug (18) on the at least one spring strut (15; 15') is shaped in such a manner that it is able to engage in a largely form-fitting manner in a corrugation trough (112) of the corrugated pipe (11).

3. Arrangement according to Claim 1 or 2, **characterized in that** a plurality of spring struts (15; 15') is provided, the said spring struts each bearing a retaining lug (18) and being arranged offset with respect to one another by preferably the same circumferential angle on a pitch circle coaxial with the connecting piece (12).

4. Arrangement according to one of Claims 1 - 3, **characterized in that** the annular clamping element (20) is a hose clip.

5. Arrangement according to one of Claims 1 - 3, **characterized in that** the annular clamping element is a cable binder.

6. Arrangement according to Claim 3, **characterized in that** the annular clamping element (20) is a sliding sleeve (21) which has a clear cross section which tapers conically towards the plug-on direction.

7. Arrangement according to Claim 3, **characterized in that** the annular clamping element (20) has a sliding sleeve (21') having a cylindrical inner ring surface, and **in that** the spring struts (15') bear, on their rear side facing away from the connecting piece (12), a wedge-shaped longitudinal rib (22), the radial rib height of which increases towards the plug-on direction.

8. Arrangement according to one of Claims 1 - 7, **characterized in that** a sealing ring (19) lies in a frictional manner between the outer circumference of the connecting piece (12) and a corrugation crest (111) of the corrugated pipe (11).

9. Arrangement according to one of Claims 1 - 7, **characterized in that** in order to form the spring struts (15) a ring (16) is provided, the said ring surrounding the connecting piece (12) coaxially at a radial distance and having longitudinal slots (17) which are arranged offset with respect to one another by preferably the same circumferential angle and reach from a closed annular collar (161), which forms one section of the ring, as far as the free end of the ring (16).

10. Arrangement according to Claim 9, **characterized in that** a sealing ring (19) lies in a frictional manner between the inner annular surface of the annular collar (161) and a corrugation trough (112) of the corrugated pipe (11).

11. Arrangement according to one of Claims 1 - 10, **characterized in that** the connecting piece (11) and the spring struts (15; 15') together with retaining lugs (18) are integrally formed on a flange (13) for a fuel tank, and **in that** the connecting piece (12) forms the pipe piece which protrudes from the tank flange (13) towards the tank interior and is part of a connection (14) for a fuel feed line.

## Revendications

1. Dispositif pour fixer un tube ondulé (11) sur un ajutage (12) essentiellement cylindrique creux, notamment pour des unités de transfert ou d'alimentation de carburant dans les véhicules automobiles,
**caractérisé en ce que**
l'ajutage (12) comporte au moins une jambe élastique (15 ; 15'), prévue à distance radiale et s'étendant dans la direction longitudinale de l'ajutage, cette jambe ayant un bec de fixation (18) venant radialement en saillie vers l'ajutage 12,
extérieurement, autour d'au moins une jambe élastique (15 ; 15') et autour du tube ondulé (11) emmanché sur l'ajutage (12), on installe un élément de serrage (20) annulaire qui génère une force de serrage radiale dirigée vers le tube ondulé (11), appliquée sur au moins une jambe élastique (15, 15'), et le bec de fixation (18) d'au moins une jambe élastique (15 ; 15') pénètre dans un creux (112) du tube ondulé (11).

2. Dispositif selon la revendication 1,
**caractérisé en ce que**
le bec de fixation (18) d'au moins une jambe élastique (15 ; 15') est formé pour pénétrer dans une très large mesure par une liaison de forme dans un creux (112) du tube ondulé (11).

3. Dispositif selon la revendication 1 ou 2,
**caractérisé par**
un ensemble de jambes élastiques (15 ; 15') portant chacune un bec de fixation (18), ces jambes étant réparties de manière décalée sur un cercle de base coaxial à l'ajutage (12), et cela suivant une disposition de préférence équiangulaire.

4. Dispositif selon l'une quelconque des revendications 1 à 3,
**caractérisé en ce que**
l'élément de serrage (20), annulaire est un collier à tuyau.

5. Dispositif selon l'une quelconque des revendications 1 à 3,
**caractérisé en ce que**
l'élément de serrage annulaire est un serre-câble.

6. Dispositif selon la revendication 3,
**caractérisé en ce que**
l'élément de serrage annulaire (20) est un manchon coulissant (21) ayant une section libre se rétrécissant suivant une forme conique dans la direction opposée à la direction d'emmanchement.

7. Dispositif selon la revendication 3,
**caractérisé en ce que**
l'élément de serrage annulaire (20) comporte un manchon coulissant (21') avec une surface annulaire intérieure cylindrique, et
les jambes élastiques (15') portent sur leur côté arrière à l'opposé de l'ajutage (12), une nervure longitudinale (22) en forme de coin dont la hauteur radiale augmente dans la direction opposée à la direction d'emmanchement.

8. Dispositif selon l'une quelconque des revendications 1 à 7,
**caractérisé en ce qu'**
entre l'enveloppe extérieure de l'ajutage (12) et un sommet d'ondulation (111) du tube ondulé (11), on introduit un joint d'étanchéité (19) par une liaison par la force.

9. Dispositif selon l'une quelconque des revendications 1 à 7,
**caractérisé en ce que**
pour réaliser les jambes élastiques (15), on forme un anneau (16) entourant l'ajutage (12) de manière coaxiale et à une distance radiale, que l'on munit de fentes longitudinales (17) décalées de préférence de manière équiangulaire, ces fentes allant d'une collerette annulaire (161) formant un anneau fermé jusqu'à l'extrémité frontale libre de l'anneau (16).

10. Dispositif selon la revendication 9,
**caractérisé par**
un joint d'étanchéité (19) inséré avec une liaison par la force entre la surface annulaire intérieure de la collerette annulaire (161) et un creux (112) du tube ondulé (11).

11. Dispositif selon l'une quelconque des revendications 1 à 10,
**caractérisé en ce que**
l'ajutage (11) et les jambes élastiques (15 ; 15') avec les becs de fixation (18) sont réalisés en une seule pièce sur une bride (13) pour un réservoir de carburant, et l'ajutage (12) forme l'élément de tube venant en saillie de la bride du réservoir (13) jusqu'à l'intérieur du réservoir, pour le raccord (14) d'une conduite de transfert de carburant.
